# EUROPEAN PATENT APPLICATION

(11) **EP 4 582 919 A1**
(43) Date of publication of application: **09.07.2025**
(21) Application number: 24758698.5
(22) Date of filing: 26.08.2024
(51) Int. Cl.: G06F 3/04815, G06F 3/00, G06Q 50/10, G06F 3/16, G06F 3/04842

(54) **ELECTRONIC APPARATUS AND CONTROL METHOD THEREOF**

(30) Priority: 13.11.2023 KR 20230156617
(71) Applicant: Samsung Electronics Co., Ltd, Suwon-si, Gyeonggi-do 16677 (KR)
(72) Inventor: SEO, Yoojin, Suwon-si, Gyeonggi-do 16677 (KR); KIM, Myungjae, Suwon-si, Gyeonggi-do 16677 (KR); CHOI, Gippeum, Suwon-si, Gyeonggi-do 16677 (KR); LEE, Jaehwang, Suwon-si, Gyeonggi-do 16677 (KR)
(74) Representative: Appleyard Lees IP LLP
(86) International application number: PCT/KR2024/012733
(87) International publication number: WO 2025/105661

(57) **Abstract**

An electronic apparatus includes a camera, a display, and at least one processor, and the at least one processor is configured to obtain an image including a user through the camera while content is being output through the display, identify a first group including the user from among a plurality of groups corresponding to the content based on context information corresponding to the content, and the image, and control the display to output a first graphical object corresponding to the user on a first area of the display corresponding to the first group.

## Description

### [Technical Field]

The present disclosure relates to an electronic apparatus and a controlling method thereof. The present disclosure relates to an electronic apparatus that identifies a group including a user by analyzing a user response to content and a controlling method thereof.

### [Background Art]

Recently, various content platforms or electronic apparatuses that provide content have been providing a chat service about content. By doing so, a user who views content using a content platform or an electronic apparatus can chat in real time with other users who are viewing the same content, rather than being in the existing viewing environment where only the content is provided to the user unilaterally.

However, in the process of using the chat service, the user may receive a large number of chat messages in a short period of time, or a large number of chat messages that are unrelated to the content and the user. While the user is reading those chat messages or selecting chat messages that are relevant to the user, those chat messages may interfere with the user's viewing the content, causing problems.

### [Detailed Description of the Disclosure]

### [Technical Solution]

An electronic apparatus according to an embodiment includes a camera, a display, and at least one processor, and the at least one processor is configured to obtain an image including a user through the camera while content is being output through the display, identify a first group corresponding to the user from among a plurality of groups corresponding to the content based on context information corresponding to the content, and the image, and control the display to output a first object corresponding to the user on a first area of the display corresponding to the first group.

The at least one processor may be configured to obtain user response information including a user response score corresponding to each of the plurality of groups based on the context information and the image, and identify the first group based on the user response information.

The at least one processor may be configured to obtain the context information including a context type and a context correspondence probability value related to the content, obtain a response type corresponding to the context type based on the image, and obtain the user response information based on the context correspondence probability value and the response type .

The at least one processor may be configured to, based on a user response score equal to or greater than a threshold value being identified from among a plurality of user response scores included in the user response information, identify a group corresponding to the identified user response score as the first group.

The apparatus may further include a memory configured to store history information including at least one of a content viewing history or a group identification history, and the at least one processor may be configured to identify a group corresponding to the user from among the plurality of groups based on the history information, and identify the first group by applying a first weight to a user response score corresponding to the identified group.

The apparatus may further include a communication interface, and the at least one processor may be configured to receive response information of another user corresponding to the first group from a server device through the communication interface, and control the display to output a second object corresponding to the another user based on the another user response information together with the first object on the first area.

The another user response information may include a response score of another user corresponding to the first group, and the at least one processor may be configured to identify a first size of the first object, a first location of the first object, a second size of the second object, and a second location of the second object based on the user response score and the another user response information, control the display to output the first object at the first location in the first size on the first area, and control the display to output the second object at the second location in the second size on the first area.

The apparatus may further include a microphone, and the at least one processor may be configured to obtain an audio signal including a user voice through the microphone while displaying the content through the display, obtain first user response information based on the image, obtain second user response information based on the audio signal, and identify the first group based on the first user response information and the second user response information.

The at least one processor may be configured to identify the first group by summing a first user response score included in the first user response information and a second user response score included in the second user response information by group.

The at least one processor may be configured to obtain a first response type of a preset time based on the image, obtain a second response type of the preset time based on the audio signal, and based on the first response type corresponding to the second response type, identify the first group by applying a second weight to a user response score corresponding to the preset time.

A controlling method of an electronic apparatus including a display according to an embodiment includes obtaining an image including a user while content is being output through the display, identifying a first group corresponding to the user from among a plurality of groups corresponding to the content based on context information corresponding to the content, and the image, and outputting a first object corresponding to the user on a first area of the display corresponding to the first group.

The identifying a first group may include obtaining user response information including a user response score corresponding to each of the plurality of groups based on the context information and the image, and identifying the first group based on the user response information.

The controlling method may include obtaining the context information including a context type and a context correspondence probability value related to the content, obtaining a response type corresponding to the context type based on the image, and obtaining the user response information based on the context correspondence probability value and the response type.

The identifying a first group may include, based on a user response score equal to or greater than a threshold value being identified from among a plurality of user response scores included in the user response information, identifying a group corresponding to the identified user response score as the first group.

The electronic apparatus may be configured to store history information including at least one of a content viewing history or a group identification history, and the identifying a first group may include identifying a group corresponding to the user from among the plurality of groups based on the history information, and identifying the first group by applying a first weight to a user response score corresponding to the identified group.

The controlling method may further include receiving response information of another user corresponding to the first group from a server device, and outputting a second object corresponding to the another user based on the another user response information together with the first object on the first area.

The another user response information may include a response score of another user corresponding to the first group, and the controlling method may include identifying a first size of the first object, a first location of the first object, a second size of the second object, and a second location of the second object based on the user response score and the another user response information, outputting the first object at the first location in the first size on the first area, and outputting the second object at the second location in the second size on the first area.

The controlling method may include obtaining an audio signal including a user voice while displaying the content through the display, obtaining first user response information based on the image, obtaining second user response information based on the audio signal, and identifying the first group based on the first user response information and the second user response information.

The identifying a first group may include identifying the first group by summing a first user response score included in the first user response information and a second user response score included in the second user response information by group.

The identifying a first group may include obtaining a first response type of a preset time based on the image, obtaining a second response type of the preset time based on the audio signal, and based on the first response type corresponding to the second response type, identifying the first group by applying a second weight to a user response score corresponding to the preset time.

There is provided an electronic apparatus comprising: a camera; a display; and at least one processor, wherein the at least one processor is configured to: obtain an image including a user through the camera while content is being output through the display; identify a first group corresponding to the user from among a plurality of groups corresponding to the content based on context information corresponding to the content, and the image; and control the display to output a first object corresponding to the user on a first area of the display corresponding to the first group.

In an embodiment, the at least one processor is configured to: obtain user response information including a user response score corresponding to each of the plurality of groups based on the context information and the image; and identify the first group based on the user response information.

In an embodiment, the at least one processor is configured to: obtain the context information including a context type and a context correspondence probability value related to the content; obtain a response type corresponding to the context type based on the image; and obtain the user response information based on the context correspondence probability value and the response type.

In an embodiment, the at least one processor is configured to, based on a user response score equal to or greater than a threshold value being identified from among a plurality of user response scores included in the user response information, identify a group corresponding to the identified user response score as the first group.

In an embodiment, the apparatus further comprises: a memory configured to store history information including at least one of a content viewing history or a group identification history, wherein the at least one processor is configured to: identify a group corresponding to the user from among the plurality of groups based on the history information; and identify the first group by applying a first weight to a user response score corresponding to the identified group.

In an embodiment, the apparatus further comprises: a communication interface, wherein the at least one processor is configured to: receive response information of another user corresponding to the first group from a server device through the communication interface; and control the display to output a second object corresponding to the another user based on the another user response information together with the first object on the first area.

In an embodiment, the another user response information includes a response score of another user corresponding to the first group; and wherein the at least one processor is configured to: identify a first size of the first object, a first location of the first object, a second size of the second object, and a second location of the second object based on the user response score and the another user response information; control the display to output the first object at the first location in the first size on the first area; and control the display to output the second object at the second location in the second size on the first area.

In an embodiment, the apparatus further comprises: a microphone, wherein the at least one processor is configured to: obtain an audio signal including a user voice through the microphone while displaying the content through the display; obtain first user response information based on the image; obtain second user response information based on the audio signal; and identify the first group based on the first user response information and the second user response information.

In an embodiment, the at least one processor is configured to identify the first group by summing a first user response score included in the first user response information and a second user response score included in the second user response information by group.

In an embodiment, the at least one processor is configured to: obtain a first response type of a preset time based on the image; obtain a second response type of the preset time based on the audio signal; and based on the first response type corresponding to the second response type, identify the first group by applying a second weight to a user response score corresponding to the preset time.

There is provided a controlling method of an electronic apparatus including a display, the method comprising: obtaining an image including a user while content is being output through the display; identifying a first group corresponding to the user from among a plurality of groups corresponding to the content based on context information corresponding to the content, and the image; and outputting a first object corresponding to the user on a first area of the display corresponding to the first group.

In an embodiment, the identifying a first group comprises: obtaining user response information including a user response score corresponding to each of the plurality of groups based on the context information and the image; and identifying the first group based on the user response information.

In an embodiment, the controlling method comprises: obtaining the context information including a context type and a context correspondence probability value related to the content; obtaining a response type corresponding to the context type based on the image; and obtaining the user response information based on the context correspondence probability value and the response type.

In an embodiment, the identifying a first group comprises, based on a user response score equal to or greater than a threshold value being identified from among a plurality of user response scores included in the user response information, identifying a group corresponding to the identified user response score as the first group.

In an embodiment, the electronic apparatus is configured to store history information including at least one of a content viewing history or a group identification history; wherein the identifying a first group comprises: identifying a group corresponding to the user from among the plurality of groups based on the history information; and identifying the first group by applying a first weight to a user response score corresponding to the identified group.

### [ Brief Description of Drawings ]

The subject-matter of the present disclosure is best understood with reference to the accompanying figures, in which:
FIG. 1 is an exemplary view in which an electronic apparatus displays an object corresponding to a user;
FIG. 2 is a view illustrating configuration of an electronic apparatus;
FIG. 3 is a flowchart illustrating an operation of an electronic apparatus that displays an object corresponding to a user based on an image and context information of content;
FIG. 4 is an exemplary view illustrating a plurality of groups corresponding to content;
FIG. 5 is an exemplary view illustrating a method of calculating a user response score;
FIG. 6 is an exemplary view illustrating a method of identifying a first group based on history information;
FIG. 7 is an exemplary view illustrating a method of identifying a first group based on a plurality of images and user voices;
FIG. 8 is an exemplary view illustrating a method of identifying a first group including a user by applying a weight based on a response type corresponding to an image and a user voice, respectively;
FIG. 9 is an exemplary view illustrating that an object corresponding to a user is displayed on an area of the display that is set corresponding to the first group;
FIG. 10 is an exemplary view illustrating a method of categorizing a plurality of users into groups, and displaying an object corresponding to a user included in each group on a display;
FIG. 11 is a detailed block diagram of an electronic apparatus;
FIG. 12 is a sequence view illustrating an electronic apparatus that is implemented as a server device; and
FIG. 13 is a flowchart schematically illustrating a method of controlling an electronic apparatus.

### [Detailed Description of Embodiments]

Since the embodiments of the present disclosure may be variously modified and have several exemplary embodiments, specific exemplary embodiments of the disclosure will be illustrated in the drawings and be described in detail in the detailed description. However, it is to be understood that the disclosure is not limited to specific exemplary embodiments, but include all modifications, equivalents, and/or alternatives according to exemplary embodiments of the disclosure. Throughout the accompanying drawings, similar components may be denoted by similar reference numerals.

In describing the disclosure, when it is decided that a detailed description for the known functions or configurations related to the disclosure may unnecessarily obscure the gist of the disclosure, the detailed description therefor will be omitted.

Terms used in the disclosure are used only to describe specific exemplary embodiments. Singular forms are intended to include plural forms unless the context clearly indicates otherwise.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

In contrast, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory apparatus.

In exemplary embodiments, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor except for a 'module' or a 'unit' that needs to be implemented by specific hardware.

Meanwhile, various elements and regions in the drawings are schematically drawn. Therefore, the technical concept of the disclosure is not limited by a relative size or spacing drawn in the accompanying drawings.

Hereinafter, embodiments of the present disclosure will be described in detail with reference to the accompanying drawings, so that those skilled in the art can easily implement them.

Meanwhile, the terms used in the following description may be used interchangeably with the terms used in the drawings.

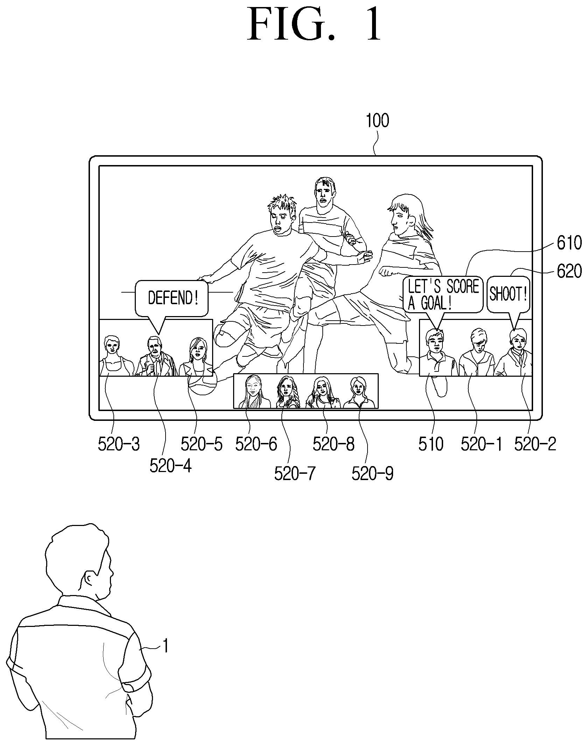

FIG. 1 is an exemplary view in which an electronic apparatus 100 displays an object corresponding to a user according to an embodiment.

Referring to FIG. 1, the electronic apparatus 100 according to one embodiment may display content via a display. Here, the content may be provided by an external server device (e.g., an over-the-top (OTT) platform, etc.).

While displaying content, the electronic apparatus 100 may display on the display a graphical object 510 corresponding to a user 1 viewing the content along with objects 520-1 to 520-9, (hereinafter, referred to as 520) corresponding to a plurality of other users viewing the same content.

In particular, the electronic apparatus 100 may categorize a plurality of users viewing the content, including the user 1, into a plurality of groups corresponding to the content, and separately display the plurality of graphical objects 510, 520 corresponding to the plurality of users included in each group on the display. For example, when the content is a soccer match (or various other sports events and discussions, etc.), the electronic apparatus 100 may set two groups corresponding to the two teams playing the soccer match, and categorize a plurality of users into the two groups corresponding to the two teams playing the soccer match. The electronic apparatus 100 may categorize the plurality of users into the groups based on the team that each user supports. The electronic apparatus 100 separately displays, on the display, the plurality of objects 510, 520 corresponding to the plurality of users included in the groups corresponding to the respective teams. The objects are depicted as graphical objects.

Through the above, the user 1 may identify a plurality of other users included in the same group as the user 1. Referring back to the example described above, when the content is a soccer match, the user 1 may recognize other users who support the same team as the user 1, and may chat 610, 620 with the plurality of other users included in the same group 520-1, 520-2 via the electronic apparatus 100 in real time.

The plurality of users included in the same group may have the same or similar opinions and thoughts regarding the content. The electronic apparatus 100 of the present disclosure may allow the user 1 viewing the content to clearly recognize other users included in the same group as the user 1 and, in particular, to accurately recognize only chat messages 610, 620 (or text corresponding to voice messages) entered by other users included in the same group, thereby increasing the user 1's sense of immersion in the content.

To this end, the electronic apparatus 100 of the present disclosure identifies, among a plurality of groups corresponding to the content, a group in which the user 1 is included. In particular, the electronic apparatus 100 identifies the group in which the user 1 is included by analyzing the user's response, depending on a situation occurred in the content. Hereinafter, an embodiment thereof will be described in detail.

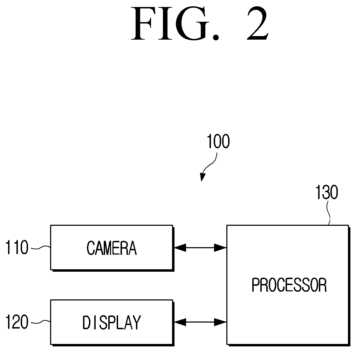

FIG. 2 is a view illustrating configuration of the electronic apparatus 100 according to an embodiment.

Referring to FIG. 2, the electronic apparatus 100 according to an embodiment includes a camera 110, a display 120, and a processor 130.

The electronic apparatus 100 according to an embodiment analyzes a response of a user receiving content, i.e., the user 1 of FIG. 1, and identifies a group including the user among a plurality of groups corresponding to the content. In one example, the electronic apparatus 100 may be a device for displaying content comprising a plurality of image frames. For example, the electronic apparatus 100 may be implemented as a device that displays content via a display, such as TV, smart TV, signage, desktop PC, laptop, smartphone, tablet PC, or the like. As another example, the electronic apparatus 100 may be implemented as a server device that provides content.

The camera 110 obtains an image of an object by photographing objects around the electronic apparatus 100. The camera 110 obtains an image or a plurality of images of the user 1 located in the vicinity of the electronic apparatus 100. To this end, the camera 110 may be include a complementary metal-oxide-semiconductor (CMOS) image sensor (CIS), a charge coupled device (CCD) image sensor, and/or the like. However, the camera 110 is not limited thereto, and the camera 110 may be implemented as a camera 110 module with various image sensors, and various resolutions, which is capable of photographing a subject.

The camera 110 may include one or more of a depth camera (e.g., an IR depth camera, etc.), a stereo camera, or an RGB camera, etc. As such, the image obtained via the camera 110 may further include depth information about an object (e.g., the user 1).

The display 120 displays various visual information (e.g., content) under the control of the processor 130. Here, the content may include text, still images, moving images, and images in various formats such as a graphical user interface (GUI), and the like. The display 120 may also be implemented as a touch screen with a touch panel. The display 120 may function as an output unit to output information from the electronic apparatus 100, while also functioning as an input unit to provide an input interface for the electronic apparatus 100.

The display 120 may be implemented as various types of displays such as liquid crystal display panel (LCD), light emitting diode (LED), organic light emitting diodes (OLED), liquid crystal on silicon (LCoS), digital light processing (DLP), etc. The display 120 may further include additional components depending on its implementation method. For example, the display 120 may also include drive circuitry, backlight units, and the like, which may be implemented in the form of an amorphous silicon (a-Si) thin film transistor (TFT), a low temperature poly silicon (LTPS) TFT, an organic TFT (OTFT), and/or the like.

The processor 130 is electrically connected to the camera 110 and the display 120 to control the overall operations and functions of the electronic apparatus 100.

The processor 130 may include one or more of a central processing unit (CPU), a graphics processing unit (GPU), an accelerated processing unit (APU), a many integrated core (MIC) processor, a digital signal processor (DSP), a neural processing unit (NPU), a hardware accelerator, or a machine learning accelerator. The processor 130 may control any combination of the other components of the electronic apparatus 100, and may perform communication-related operations or data processing. The processor 130 may execute one or more programs or instructions stored in a memory (not shown). For example, the processor 130 may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor, or other specialised processor).

The processor 130 may be implemented as a single core processor comprising a single core, or as one or more multicore processors including a plurality of cores (e.g., a homogeneous multicore or heterogeneous multicore processor). When the processor 130 is implemented as a multicore processor, each of the plurality of cores included in the multicore processor may include a processor internal memory, such as a cache memory and an on-chip memory, and a common cache shared by the plurality of cores may be included in the multicore processor. Each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor 130 may be a system-on-chip (SoC) in which one or more processors and other electronic components are integrated, a single-core processor, a multi-core processor, or a core included in a single-core processor or multi-core processor. Here, the core may be implemented as CPU, GPU, APU, MIC, DSP, NPU, hardware accelerator, or machine learning accelerator, etc., but the core is not limited thereto.

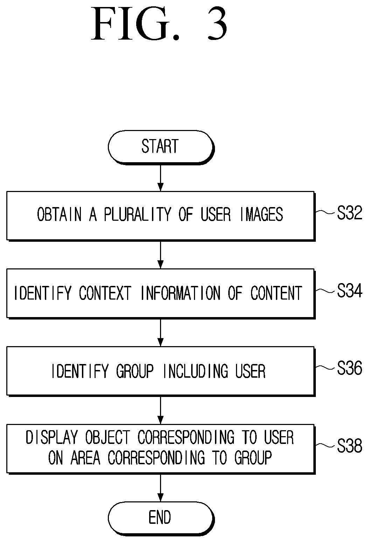

FIG. 3 is a flowchart illustrating an operation of the electronic apparatus 100 that displays the graphical object 510 corresponding to a user based on an image and context information of content according to an embodiment.

According to an embodiment, the processor 130 obtains an image or a plurality of user images via the camera 110 while displaying content via the display 120 in step S32.

The plurality of user images may represent images including a plurality of users or a plurality of images including a user.

The processor 130 may control the display 120 to display content stored in the electronic apparatus 100 (e.g., stored in a memory of the electronic apparatus 100) or content received from an external server device.

While displaying content via the display 120, the processor 130 may use the camera 110 of the electronic apparatus 100 to photograph the user 1, and obtain an image or a plurality of images of the user 1.

The processor 130 may obtain context information of the content by analyzing the content displayed through the display 120 in step S34. For example, the processor 130 may identify context information of the content by inputting a plurality of images comprising the content into a neural network model trained to identify context information of content. The neural network model may be implemented as a Convolutional Neural Network (CNN) model, a Fully Convolutional Network (FCN) model, a Region-based Convolutional Neural Network (R-CNN) model, a You Only Look Once (YOLO) model, or the like.

The context information may be situation information of the content. In other words, the processor 130 may analyze the content to identify a situation occurred in the content, and obtain the context information.

For example, when the content is a soccer match (or various other sporting events, discussion broadcasts, vote counting broadcasts, etc.), the context information may be information about the team in an advantageous situation among the first and second teams conducting the soccer match. The processor 130 analyzes the content, and when it is identified that the first team is on offense (i.e., the second team is on defense) during the soccer match or that a situation favorable to the first team has occurred, the processor 130 may identify "first team" as the context information of the content. On the other hand, when the processor 130 analyzes the content, and when it is identified that the second team is on offense (i.e., the first team is on defense) during the soccer match or that a situation favorable to the second team has occurred, the processor 130 may identify "second team" as the context information of the content. When it is identified that the identified situation in the soccer match is not favorable to both the first and second teams, or that the situation occurred in the content is not clearly identified, the processor 130 may identify "Undefined" (or neutral) as the context information of the content.

As another example, when the content is a concert video featuring multiple singers, the context information may be information about the singer(s) currently performing music on the concert stage. The processor 130 may analyze the content and, when it is identified that a first singer is performing on the concert stage, include "first singer" in the context information of the content, and when it is identified that a second singer is performing, include "second singer" in the context information of the content.

The context information may be identified differently depending on the type of content. Therefore, the type (and number) of context information may correspond to the type of content.

The type (and number) of context information may be preset based on the type of content. The processor 130 may identify the type of content being displayed on the display 120, identify the preset type (and number) of context information corresponding to the type of content, and analyze the content to identify the context information.

The processor 130 may recognize text within the content to identify the type of content and/or the context information. For example, when the content is a soccer match, the processor 130 may identify context information about the soccer match by recognizing a score displayed on the display 120. When it is identified that the first team has scored based on the score in the content, the processor 130 may identify that a situation favorable to the first team has occurred during the soccer match, and identify "first team" as the context information of the content. As another example, when the content is a concert video, the processor 130 may identify the context information of the concert video by recognizing singer introduction text displayed on the display 120.

The processor 130 may identify context information by obtaining an audio signal of content. To this end, the processor 130 may obtain an audio signal output with the content, extract a voice included in the audio signal, and identify content type and/or context information of the content through voice recognition for the extracted voice. For example, the processor 130 may recognize the voice of a caster or commentator of a soccer match to identify context information of the soccer match. Alternatively, the processor 130 may recognize the voice of a singer performing in a concert video to identify context information of the concert video. To this end, the processor 130 may utilize an automatic speech recognition (ASR) model, a natural language understanding (NLU) model, and the like stored in a memory (not shown) of the electronic apparatus 100.

The processor 130 may identify context information of content based on various methods. For example, the processor 130 may recognize an object in the content, extract object information, and identify context information of the content.

In the case of a soccer match video, the processor 130 may recognize a soccer player in the content, extract information about the soccer player (e.g., team, player name, number, etc.), and identify context information about the soccer match. In the case of a concert video, the processor 130 may recognize a singer in the content, extract information about the singer (e.g., singer's name), and identify context information of the concert video.

After identifying the context information, the processor 130 identifies a group including user 1 from among a plurality of groups corresponding to the content based on the identified context information and the image in step S36. The group including the user is described herein as a group corresponding to the user.

The processor 130 may identify a plurality of groups corresponding to the content. The groups are groups to which the users, to whom the content is provided, may belong. The type and number of plurality of groups may be set depending on the type of content. In particular, the plurality of groups may be categorized and set corresponding to a plurality of context information identified in each content.

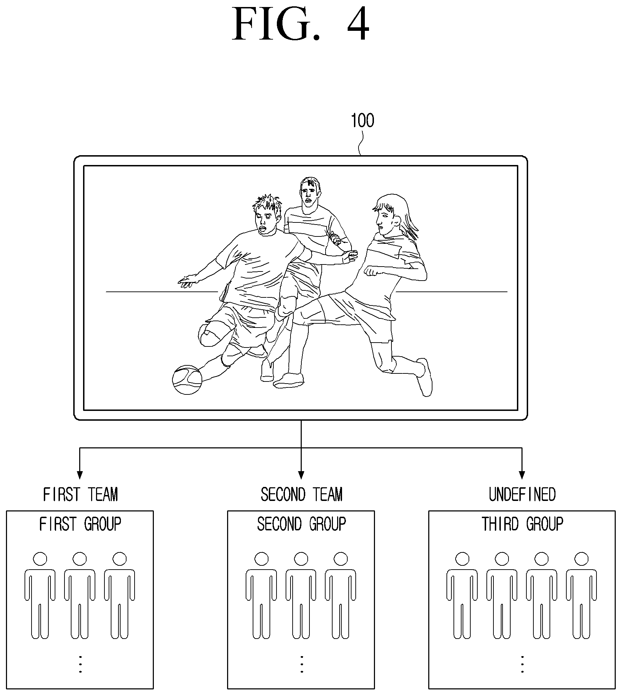

FIG. 4 is an exemplary view illustrating a plurality of groups corresponding to content according to an embodiment.

Referring to FIG. 4, when the content is a soccer match, a plurality of groups corresponding to the content may be categorized as a first group, a second group, and a third group corresponding to a plurality of context information of the soccer match (first team, second team, and undefined). Here, the first group may correspond to the context information "first team", the second group may correspond to the context information "second team", and the third group may correspond to the context information "undefined".

As another example, when the content is a concert video, a plurality of groups may be categorized into groups corresponding to each singer of the content, a plurality of context information (first singer and second singer) of the content. The plurality of groups may include a "first group" corresponding to "first singer" that is the context information and a "second group" corresponding to "second singer" that is context information.

The processor 130 may identify a group including the user 1 (hereinafter, referred to as a first group) from among the plurality of groups corresponding to content. In particular, the processor 130 may identify the first group including the user 1 based on context information and image of the user.

For example, when the context information of the content is identified, or when it is identified that the context information of the content is changed, the processor 130 may obtain an image or a plurality of images via the camera 110. The processor 130 may identify the first group including the user 1 from among the plurality of groups based on the obtained image(s). In other words, the processor 130 identifies the context information of the content in order to identify the user 1's response regarding the content being displayed, and identifies the user 1's response using the plurality of images corresponding to the context information. The processor 130 may identify the first group including the user 1 by considering the identified response of the user 1.

Hereinafter, a specific method of identifying the group that includes the user 1 will be described.

The processor 130 may calculate a user 1's response score for each group, and identify the group that includes the user 1 from among the plurality of groups.

In this regard, in one example, the processor 130 may calculate a plurality of user response scores corresponding to each of the plurality of groups based on the identified context information and image.

The processor 130 may calculate the user 1's response score for each of the plurality of groups corresponding to the content. Here, the user 1's response score may be a probability value that the user 1 would be included in the group. In particular, while the content is being displayed via the display 120, the processor 130 may determine whether the user 1's response associated with the identified context information is positive, negative, or neutral, and may calculate a probability value that the user 1 would be included in each group corresponding to the content as the user 1's response score based on the determined response of the user 1.

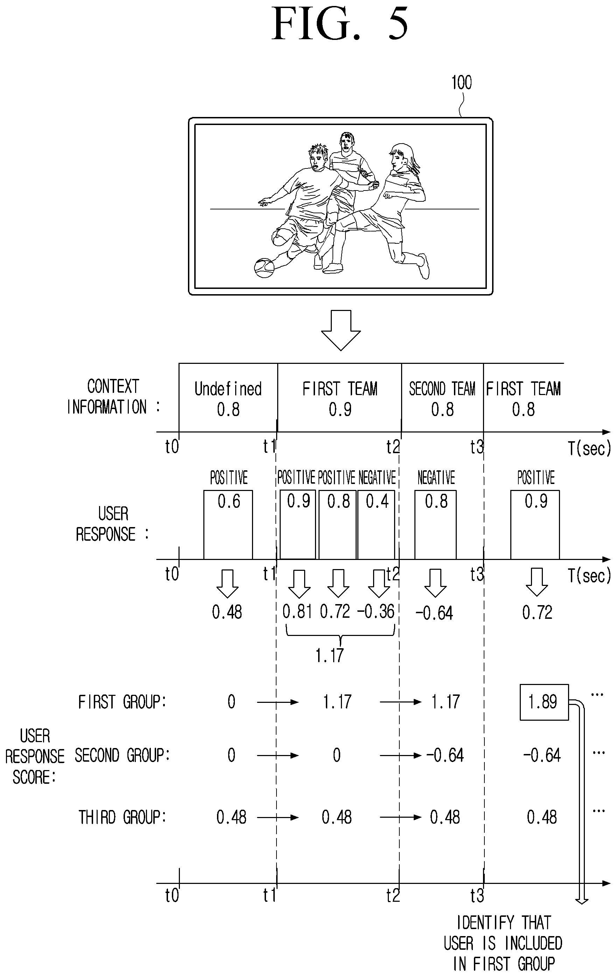

FIG. 5 is an exemplary view illustrating a method of calculating the user 1's response score according to an embodiment.

In one example, the processor 130 may analyze the content being displayed to identify a context type and a context correspondence probability value as context information. The processor 130 may analyze the content being displayed via the display 120 in real time to identify the context type of the content.

The processor 130 may identify a context correspondence probability value. Here, the context correspondence probability value may be a probability value for an identified context type. The processor 130 may analyze the content being displayed via the display 120 in real time to identify a plurality of context types corresponding to the content. Here, the type and number of context may be preset corresponding to the content. The processor 130 may calculate a probability value for each context type, and the context type with the highest probability value may be identified as the context type (or, context information) of the content.

Referring to FIG. 5, while a soccer match is being displayed via the display 120, the processor 130 may calculate a context type of the soccer match and a probability value for the context type. The processor 130 identifies the context type of the soccer match displayed via the display 120 from t0 to t1 as "undefined", and calculates a probability value of 0.8 for "undefined". The processor 130 identifies the context type of the soccer match displayed via the display 120 from t1 to t2 as "first team", and calculates a probability value of 0.9 for "first team". The processor 130 identifies the context type of the soccer match displayed via the display 120 from t2 to t3 as "second team", and calculates a probability value of 0.8 for "second team". The processor 130 identifies the context type of the soccer match displayed via the display 120 from t3 to the present as "first team", and calculates a probability value of 0.8 for "first team".

As described above, the processor 130 may input a plurality of images comprising the soccer match (i.e., content) into a pre-trained neural network model to obtain a context type of the content and a probability value for the context type.

Based on the image of the user, the processor 130 may identify a response type corresponding to the context type, and calculate a plurality of user response scores corresponding to each of a plurality of groups based on a context correspondence probability value and the response type.

The processor 130 may identify whether the user 1's response corresponding to the context type is positive, negative, or neutral based on the image. In particular, the processor 130 may identify the user 1's response type for the context type based on the user image corresponding to the context type. The user response may include a response type. The user response may indicate the user's response for the content that is currently being output (or displayed).

For example, referring to FIG. 5, the processor 130 may identify the response type of the user 1 for the context type, "undefined", based on the image obtained from t0 to t1. Based on the image obtained from t1 to t2, the processor 130 may identify the response type for the context type, "first team." Likewise, the processor 130 may identify the response type for the context type, "second team", based on the image obtained from t2 to t3, and identify again the response type for the context type, "third team", based on the image obtained from t3 onward.

The processor 130 may identify the facial expression and behavioral pattern of the user 1 identified based on the image to identify the user 1's response type. For example, when it is identified that the user 1 frowns or gets angry based on the image, the processor 130 may identify the response type of the user 1 as "negative." On the other hand, when it is identified that the user 1 is smiling or dancing based on the image, the processor 130 may identify the response type of the user 1 as "positive." To this end, the processor 130 may input the image into a neural network model trained to identify the user 1's response type, and obtain a result value regarding the user 1's response type.

The processor 130 may also calculate a probability value corresponding to the response type together with the user 1's response type based on the image. Here, the probability value corresponding to the response type may be a probability value for the identified response type. The processor 130 may calculate a probability value corresponding to a positive response type of the user 1 and a probability value corresponding to a negative response type based on a plurality of images. The processor 130 may identify the response type with the highest probability value as the response type of the user 1. In this way, the processor 130 may identify the response type of the user 1 corresponding to each context type.

The processor 130 may repeatedly identify the user 1's response type with respect to the same context information, e.g., at different points in time or over different time periods. The user 1's response type may be identified based on a plurality of images at a preset time interval. Alternatively, when it is identified that the user 1's facial expression and behavioral pattern has changed based on the plurality of images, the processor 130 may identify the user 1's response type corresponding to the user 1's facial expression and behavioral pattern.

For example, referring to FIG. 5, the processor 130 identified the response type of the user 1 from t0 to t1 as "positive", and calculated a probability value of 0.6 for "positive." The processor 130 identified the response type of the user 1 on multiple times with respect to the same context information (i.e., the context type of the first team) from t1 to t2. In other words, the processor 130 repeatedly identified the response type of the user 1 during △t2 (i.e., from t1 to t2). The processor 130 identified the first response type of the user 1 identified from t1 to t2 as "positive" and calculated a probability value of 0.9 for "positive", identified the second response type as "positive" and calculated a probability value of 0.8 for "positive", and identified the third response type as "negative" and calculated a probability value of 0.4 for "negative". The processor 130 identified the response type corresponding to the identified context type (i.e., second team) from t2 to t3 as "negative" and calculated a probability value of 0.8 for "negative." The processor 130 identified the response type corresponding to the identified context type (i.e., first team) from t3 to the present as "positive" and calculated a probability value of 0.9 for "positive."

When the probability value for the response type is less than a preset value, the processor 130 may identify the user 1's response type as "neutral."

The processor 130 may calculate a plurality of user response scores corresponding to each of a plurality of groups based on a context correspondence probability value and a response type. The processor 130 may calculate the user 1's response score for a context type based on a probability value corresponding to a context type identified while the content is being displayed. In particular, the processor 130 may select a group corresponding to the context type from among the plurality of groups, and calculate the user 1's response score for the selected group based on the probability value corresponding to the context type.

The processor 130 may calculate a plurality of user response scores corresponding to each of a plurality of groups based on a probability value corresponding to a context type identified while the content is being displayed, a probability value corresponding to the user 1's response type, and the response type.

The processor 130 may select a group corresponding to the context type from among the plurality of groups, and calculate the user 1's response score for the selected group based on a probability value corresponding to the context type and a probability value corresponding to the response type. For example, the processor 130 may multiply the probability value corresponding to the context type with the probability value corresponding to the response type and calculate the obtained result value as the user 1's response score for the selected group corresponding to the context type. The processor 130 may determine a sign of the user 1's response score based on the user 1's response type.

The processor 130 may determine a sign of the user 1's response score based on the user 1's response type. When the response type is "positive", the processor 130 may determine the sign of the response score to be positive (+), and when the response type is "negative", the processor 130 may determine the sign of the response score to be negative (-). The processor 130 may accumulate and calculate the user 1's response score for each group while the content is being displayed.

Referring back to FIG. 5, the processor 130 may select the third group from among the plurality of groups as the context type of the content displayed from t0 to t1 is identified as "undefined." The processor 130 may calculate (+)0.48 obtained by multiplying the probability value of 0.8 for the context type ("undefined") with the probability value of 0.6 for the response type ("positive") as the user 1's response score for the third group.

As the context type of the content displayed from t1 to t2 is identified as "first team", the processor 130 may select the first group from among the plurality of groups. The processor 130 may multiply the probability value of 0.9 for the context type ("first team") with the probability value of 0.9 for the first identified response type ("positive") in the corresponding context type to calculate a result value of (+)0.81. Likewise, the processor 130 may multiply the probability value of 0.9 for the context type ("first team") with the probability value of 0.8 for the second identified response type ("positive") in the corresponding context type to calculate a result value of (+)0.72. Finally, the processor 130 may multiply the probability value of 0.9 for the context type ("first team") with the probability value of 0.4 for the third identified response type ("negative") in the corresponding context type to calculate a result value of (-)0.36. The processor 130 may sum the calculated result values to calculate the user 1's response score for the first group. In other words, the processor 130 may calculate (+)1.17 as the user 1's response score for the first group.

As the context type of the content displayed from t2 to t3 is identified as "second team", the processor 130 may select the second group from among the plurality of groups. The processor 130 may calculate (-)0.64 obtained by multiplying the probability value of 0.8 for the context type ("second team") with the probability value of 0.8 for the response type ("negative") as the user 1's response score for the second group.

As the context type of the content displayed from t3 to the present is again identified as "first team", the processor 130 may select the first group from among the plurality of groups. The processor 130 may multiply the probability value of 0.8 for the context type ("first team") with the probability value of 0.9 for the first identified response type ("positive") in the corresponding context type to calculate a result value of (+)0.72. The processor 130 may add (+)0.72 to the user 1's response score ((+)1.17) corresponding to the first group, which was previously calculated (i.e., calculated from t1 to t2), to calculate the user 1's response score corresponding to the first group as (+)1.89.

The processor 130 may identify the first group including the user 1 from among the plurality of groups corresponding to the content based on a plurality of user response scores calculated for each group.

In particular, when the user 1's response score that is equal to or greater than a preset value is identified from among the calculated plurality of user response scores, the processor 130 may identify a group corresponding to the identified user 1's response score as the first group.

For example, referring back to FIG. 5, when the preset value is (+)1.5, the processor 130 may identify that the user 1 is included in the first group after t3.

According to an embodiment, the processor 130 may further consider history information related to the content of the user 1 to identify the first group that includes the user 1.

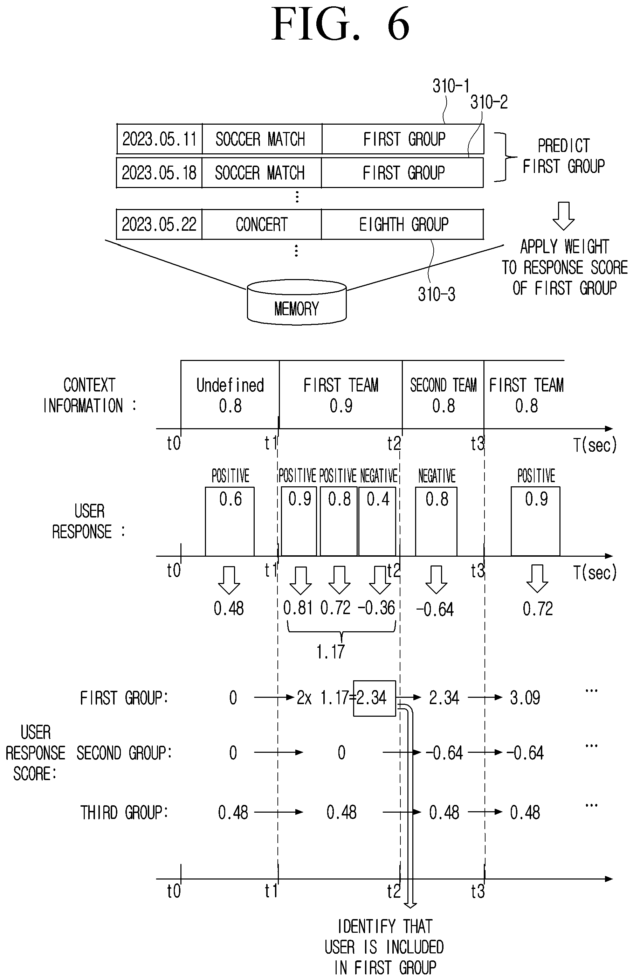

FIG. 6 is an exemplary view illustrating a method of identifying a first group based on history information according to an embodiment.

In one example, the processor 130 may apply a weight (hereinafter, referred to as a first weight) to the user 1's response score corresponding to one of the plurality of groups based on history information related to the user 1's content stored in the memory of the electronic apparatus 100. Here, the history information may include information about the content previously viewed by the user 1 and information about the group where the user 1 that viewed the content is included. The processor 130 may extract from the history information stored in the memory history information for the same type of content as the content, or history information for the content having the same source device (or server device) that provides the content, and identify the group in which the user 1 was previously included based on the extracted history information. Based on information about the group in which the user 1 was previously included, the processor 130 may determine a group to apply the first weight from among the plurality of groups corresponding to the content currently being displayed via the display 120. Here, the group to apply the first weight may be a group that is predicted to include the user 1 from among the plurality of groups corresponding to the content currently being displayed via the display 120 based on the user 1's history information.

For example, referring to FIG. 6, when the content is a soccer match between a first team and a second team, the processor 130 may extract history information about the soccer match from the history information stored in the memory. The processor 130 may identify a group that is predicted to include the user 1 from among the groups corresponding to the first team and the second team, respectively. In particular, based on the extracted history information, the processor 130 may identify that the user 1 has been repeatedly included in the first group corresponding to the first team in the past, and may predict that the user 1 will be included in the first group corresponding to the first team with respect to the current soccer match being displayed via the display 120. In other words, the processor 130 may identify the first group corresponding to the first team first among the first team and the second team as the group where a weight is to be applied. The processor 130 may apply the first weight to the user 1's response score corresponding to the first team.

The processor 130 may identify the first group including the user 1 from among the plurality of groups based on the user 1's response score to which the first weight is applied and the user 1's remaining response scores.

The processor 130 may identify a group corresponding to a response score equal to or greater than a preset value among the response score corresponding to the group to which the first weight is applied and the response scores corresponding to the remaining groups to which the first weight is not applied as the first group in which the user 1 is included.

For example, referring to FIG. 6, the processor 130 may identify the first group that includes the user 1 based on the response score corresponding to the first group to which the first weight is applied and the response score corresponding to the second group. When the first weight is 2, and the value set for the response score for identifying the first group is 2.0, the processor 130 may identify that the user 1 is included in the first group based on the user 1's response score ((+)2.34) corresponding to the first group calculated from t1 to t2. In other words, comparing FIGS. 5 and 6, when the user 1's history information is used, the processor 130 may identify the first group that includes the user 1 more quickly.

The history information of the user 1 may be classified according to the account set in the electronic apparatus 100 (or the program providing content). In other words, when a plurality of accounts are set in the electronic apparatus 100 (or the program providing content), the electronic apparatus 100 may identify the first group using only the history information corresponding to the account selected by the user 1 from among the plurality of accounts.

According to an embodiment, the processor 130 may identify the user 1's response to the content based on various information as well as a plurality of images obtained via the camera 110 and the like.

In one example, the processor 130 may, while displaying content via the display 120, obtain the user 1's voice via a microphone of the electronic apparatus 100 and, based on the image and the user 1's voice, calculate the user 1's response score corresponding to the image and the user 1's response score corresponding to the user 1 voice regarding the identified context information.

The processor 130 may identify the user 1's response type (and a probability value for the response type) based on visual information about the user 1. In other words, the processor 130 may identify the user 1's facial expression and behavioral pattern based on the image obtained via the camera 110 to identify whether the user 1's response to the content is positive, negative, or neutral. In this regard, the description of the present disclosure described above may be equally applicable, so a detailed description thereof will be omitted.

The processor 130 may identify the user 1's response type (and a probability value for the response type) based on auditory information about the user 1, for example information included in an audio signal.

When the context information of the content is identified, or when it is identified that the context information of the content has changed, the processor 130 may obtain the user 1's voice via the microphone, and identify whether the user 1's response is positive, negative, or neutral based on the user 1's voice obtained. For example, the processor 130 may identify the user 1's response type based on the volume of the user 1's voice and the content of the utterance corresponding to the user 1's voice. However, the present disclosure is not limited thereto, and the processor 130 may identify the user 1's response based on various input via the microphone (e.g., cheering sound which may indicate a positive response, etc.).

The processor 130 may determine the content of the utterance corresponding to the user 1's voice by using an audio signal (i.e., a voice signal, or data) corresponding to the user 1's voice input through the microphone in an automatic speech recognition (ASR) model, a natural language understanding (NLU) model, or the like stored in the memory (not shown) of the electronic apparatus 100, and may identify whether the user 1 has made positive utterance or negative utterance about the content based on the determination result.

Based on the user 1's voice, the processor 130 may calculate the user 1's response type and a probability value corresponding to the response type. In other words, based on the user 1's voice, the processor 130 may calculate a probability value that the user 1's response type corresponds to a positive response type and a probability value that the user 1's response type corresponds to a negative response type. The processor 130 may identify the response type with the highest probability value as the user 1's response type.

Whenever the user 1's voice is input via the microphone, or when the user 1's voice is input more than a preset number of times, the processor 130 may identify the user 1's response type (and a probability value for the response type) based on the input user 1's voice.

The processor 130 may calculate the user 1's response score corresponding to each of a plurality of groups corresponding to the content based on a response type identified based on the plurality of images and a probability value for the response type. The processor 130 may calculate the user 1's response score corresponding to each of a plurality of groups corresponding to the content based on a response type identified based on the user 1's voice and a probability value for the response type. Hereinafter, for convenience of explanation, the user 1's response score corresponding to a plurality of images of the user will be referred to as the first user 1's response score, and the user 1's response score corresponding to the user 1's voice will be referred to the second user 1's response score.

Based on the first user 1's response score and the second user 1's response score for each of the plurality of groups, the processor 130 may identify the first group including the user 1 from among the plurality of groups. The processor 130 may sum the first user 1's response score and the second user 1's response score for each of the plurality of groups, and identify the group whose summed response score (hereinafter, referred to as the third user 1's response score) is equal to or greater than a preset value as the first group.

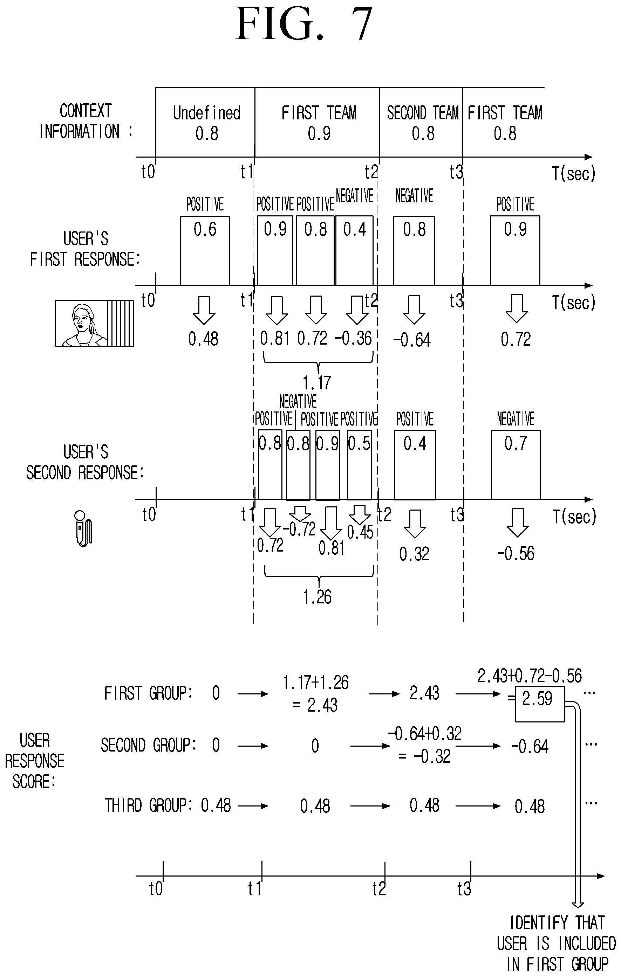

FIG. 7 is an exemplary view illustrating a method of identifying a first group based on a plurality of images and the user 1's voice according to an embodiment. The response type identified based on the plurality of images and a probability value for the response type shown in FIG. 7 are the same as in FIG. 5, so a detailed description thereof will be omitted.

Referring to FIG. 7, while content is being displayed via the display 120 based on the user 1's voice, the processor 130 may calculate a response type corresponding to the context information and a probability value for the response type. The processor 130 did not identify the user 1's response type from t0 to t1 based on the voice signal. This may be because the user 1's voice is not input through the microphone, or because the user 1's voice is input but the probability value for the response type identified based on the user 1's voice is less than a preset value.

The processor 130 identified the user 1's response type multiple times corresponding to the same context type (i.e., first team) from t1 to t2 based on the user 1's voice. In other words, based on the user 1's voice, the processor 130 repeatedly identified the user 1's response type during △t2 (i.e., from t1 to t2). The processor 130 identified the user 1's first response type as "positive" and calculated a probability value of 0.8 for "positive" based on user 1's voice from t1 to t2, identified the user 1's second response type as "negative" and calculated a probability value of 0.8 for "negative", identified the user 1's third response type as "positive" and calculated a probability value of 0.9 for "positive", and identified the user 1's fourth response type as "positive" and calculated a probability value of 0.5 for "positive".

Based on the user 1's voice, the processor 130 identified the response type corresponding to the context type identified from t2 to t3 (i.e., second team) as "positive" and calculated a probability value of 0.4 for "positive". Based on the user 1's voice, the processor 130 identified the response type corresponding to the context type identified from t3 to the present (i.e., first team) as "negative" and calculated a probability value of 0.7 for "negative".

The processor 130 may calculate a second response score based on the response type and probability value identified based on the user 1's voice. Referring back to FIG. 7, as it is identified that the context type of the content displayed from t1 to t2 is "first team", the processor 130 may select the first group from among the plurality of groups. The processor 130 may multiply a probability value of 0.9 for the context type ("first team") with a probability value of 0.8 for the first identified response type ("positive") in response to the corresponding context type based on user 1's voice to calculate a result value of (+)0.72. Likewise, the processor 130 may multiply a probability value of 0.9 for the context type ("first team") with a probability value of 0.8 for the second identified response type ("negative") in response to the corresponding context type based on the user 1's voice to calculate a result value of (-)0.72. The processor 130 may multiply a probability value of 0.9 for the context type ("first team") with a probability value of 0.9 for the third identified response type ("positive") in response to the corresponding context type based on the user 1's voice to calculate a result value of (+)0.81. The processor 130 may multiply a probability value of 0.9 for the context type ("first team") with a probability value of 0.5 for the third identified response type ("positive") in response to the corresponding context type based on the user 1's voice to calculate a result value of (+)0.45. The processor 130 may sum the calculated result values to calculate the second user 1's response score for the first group. In other words, the processor 130 may calculate (+)1.26 as the second user 1's response score for the first group.

Likewise, as it is identified that the context type of the content displayed from t2 to t3 is "second team", the processor 130 may select the second group from among the plurality of groups, and calculate the second user 1's response score for the second group as (+)0.32.

As it is again identified that the context type of the content displayed from t3 to the present is "first team", the processor 130 may select the first group from among the plurality of groups. The processor 130 may calculate the second user 1's response score corresponding to the first group as (-)0.56. The processor 130 may add the (-)0.56 to the previously calculated (i.e., calculated from t1 to t2) second user 1's response score corresponding to the first team ((+)1.26) to calculate the second user 1's response score corresponding to the first team as (+)0.7.

The processor 130 may sum the first user 1's response score and the second user 1's response score for each group to obtain a third user 1's response score for each group. The processor 130 may sum the first user 1's response score ((+)1.17) and the second user 1's response score ((+)1.26) corresponding to the first group calculated from t1 to t2 to identify the third user 1's response score ((+)2.43) corresponding to the first group. The processor 130 may sum the first user 1's response score ((-)0.64) and the second user 1's response score ((+)0.32) corresponding to the second group calculated from t2 to t3 to identify the third user 1's response score ((-)0.32) corresponding to the second group. The processor 130 may sum the first user 1's response score ((+)1.89) and the second user 1's response score ((+)0.7) corresponding to the first group calculated from t3 to the present to identify the third user 1's response score ((+)2.59) corresponding to the first group. When the preset value is 2.5, the processor 130 may identify that the user 1 is included in the first group based on the third user 1's response score corresponding to the first group identified after t3.

In one example, the processor 130 may identify a response type corresponding to the image and a response type corresponding to the user 1's voice, respectively, and when each of the identified response type matches a first type, may apply a weight (hereinafter, referred to as a second weight) to one of the plurality of user response scores calculated.

When the user 1's response identified based on a plurality of images for a particular situation of content and the user 1's response identified based on the user 1's voice are of the same type, the processor 130 may apply the second weight to the user 1's response score for the particular situation. For example, while the user 1 is watching a soccer match, when it is identified that a particular situation of the soccer match has occurred, the user 1's facial expression (or behavioral pattern) for the particular situation is positive, and the user 1's utterance that is input is positive, the processor 130 may apply the second weight to the user 1's response score for the particular situation.

In particular, the processor 130 may identify whether the response type identified based on the image and the response type identified based on the user 1's voice with respect to the same context information are the same. For example, when the sign of a first response score and a second response score calculated corresponding to the same context information matches, the processor 130 may identify that the response type identified based on the image and the response type identified based on the user 1's voice are the same. The processor 130 may apply the second weight to a third score, which is the sum of the first response score and the second response score.

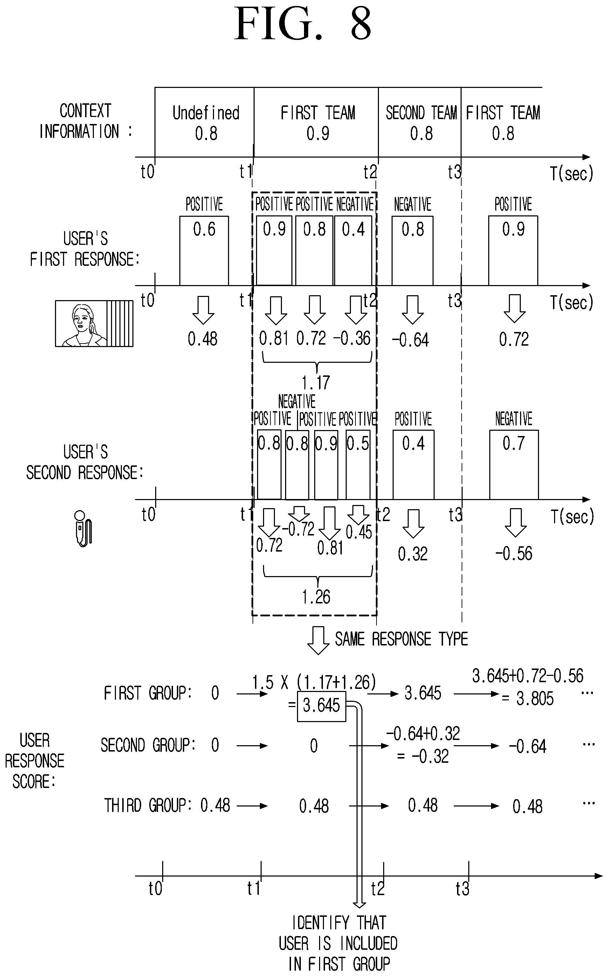

FIG. 8 is an exemplary view illustrating a method of identifying a first group including the user 1 by applying a weight based on a response type corresponding to an image and the user 1's voice, respectively, according to an embodiment.

Referring to FIG. 8, the processor 130 may identify that the first response score and the second response score calculated from t1 to t2 have the same positive signs. Accordingly, the processor 130 may identify that the user 1 made a positive facial expression (or behavioral pattern) and made a positive utterance in response to a situation favorable to the first team in the soccer match from t1 to t2. Accordingly, the processor 130 may apply the second weight to the third response score identified by summing the first response score and the second response score calculated from t1 to t2. When the second weight is 1.5, the processor 130 may identify the third response score from t1 to t2 as 3.645 (i.e., 2 x 2.43).

On the other hand, the processor 130 may identify that the first response score and the second response score calculated from t2 to t3 have different signs. Accordingly, the processor 130 may identify that the user 1 made a negative facial expression (or behavioral pattern) in response to a situation favorable to the second team in the soccer match from t2 to t3, whereas the user 1 made a positive utterance. In other words, the processor 130 may identify that the visual response type and the auditory response type identified for the user 1 are different. Accordingly, the processor 130 may not apply the second weight to the third response score identified by summing the first and second response scores calculated from t2 to t3.

The processor 130 may identify that the first response score and the second response score calculated from t3 to the present have different signs. Accordingly, the processor 130 may not apply the second weight to the third response score identified by summing the first response score and the second response score calculated from t3 to the present.

The processor 130 may identify the first group including the user 1 from among the plurality of groups based on the user 1's response score where the second weight is applied and the remaining response scores where the second weight is not applied. The processor 130 may identify the third response score corresponding to each of the groups calculated based on the user 1's response score where the second weight is applied and the remaining response scores where the second weight is not applied. The processor 130 may identify the group corresponding to the third response score equal to or greater than a preset value from among the third response score corresponding to each group as the first group including the user 1.

Referring back to FIG. 8, when the value set for the response score for identifying the first group is 2.5, the processor 130 may identify that the user 1 is included in the first group based on the third user 1's response score ((+)3.645) corresponding to the first group calculated from t1 to t2. In other words, comparing FIGS. 7 and 8, when the second weight is applied to the user 1's response score by comparing the response type corresponding to the image and the response type corresponding to the user 1's voice, the processor 130 may identify the first group including the user 1 more quickly.

The processor 130 may identify the user 1's response based on various information in addition to a plurality of images and the user 1's voice. For example, based on the user 1's text input entered via the user 1 interface of the electronic apparatus 100, the processor 130 may identify the user 1's response type (and a probability value for the response type). The electronic apparatus 100 may provide a chat service to a plurality of users who are provided with the same content, and a UI for entering chat messages between the plurality of users. The processor 130 may identify the user 1's response type based on the chat message of the user 1 entered via the user 1 interface, and calculate a response score (i.e., a fourth response score) corresponding to the chat message. The processor 130 may identify the first group that includes the user 1 based on the first and second response scores corresponding to the plurality of images and the user 1's voice and the fourth response score corresponding to the chat message.

According to an embodiment, when a plurality of users are identified based on the image, the processor 130 may calculate the user 1's response score for each of the plurality of users based on the identified context information and the image, and based on the calculated response score, identify the first group including the user 1 from among the plurality of groups.

When it is identified that the content is being viewed by a plurality of users based on the obtained image, the processor 130 may calculate each of the user 1's response score based on the obtained image. In particular, when the context information (e.g., context type) of the content is identified, or when it is identified that the context information (e.g., context type) has changed, the processor 130 may identify a group corresponding to the context information from among a plurality of groups corresponding to the content based on the context information, and calculate each of the user 1's response score corresponding to the identified group, based on the plurality of images obtained corresponding to the context information. The processor 130 may identify a group that includes each of the user 1 from among the plurality of groups based on the response score calculated corresponding to the plurality of groups of each of the user 1. Referring back to the example described above, when it is identified that there are two uses 1 who are watching a soccer match, the processor 130 may calculate a response score corresponding to a first group, a second group, and a third group of each user 1 based on the identified context information and the plurality of images obtained. When the preset value is 1.5, and the response score corresponding to the first group of the first user 1 of the two users 1 is 2.0, and the response score corresponding to the second group of the remaining user 1 (i.e., the second user 1) is 1.8, the processor 130 may identify that the first user 1 is included in the first group and the second user 1 is included in the second group.

The processor 130 may display the graphical object 510 corresponding to the user in an area of the display 120 set corresponding to the first group in step S38. The object may be described as at least one of a graphic object, a graphic user interface (GUI), or a graphic image.

The processor 130 may set a plurality of areas corresponding to each of the plurality of groups on the display 120, i.e., a separate area for each group. When the first group including the user 1 is identified, the processor 130 may identify an area corresponding to the fist group from among the plurality of areas. The processor 130 may display the graphical object 510 corresponding to the user on the identified area.

The number and location of the plurality of areas set on the display 120 may vary depending on the type of content. Accordingly, the processor 130 may identify a plurality of groups corresponding to the content after identifying the type of content, and, taking into account the number of the plurality of groups and the type of content identified, may set areas where graphical objects corresponding to each group can be appropriately displayed.

The graphical objects may be displayed in various forms. For example, based on data entered by the user 1, the processor 130 may generate an avatar corresponding to the user and display the same on the display 120.

The processor 130 may display the graphical object 510 corresponding to the user on the display 120 even before the first group is identified. The processor 130 may set a waiting area on the display 120 and display the graphical object 510 corresponding to the user on the waiting area.

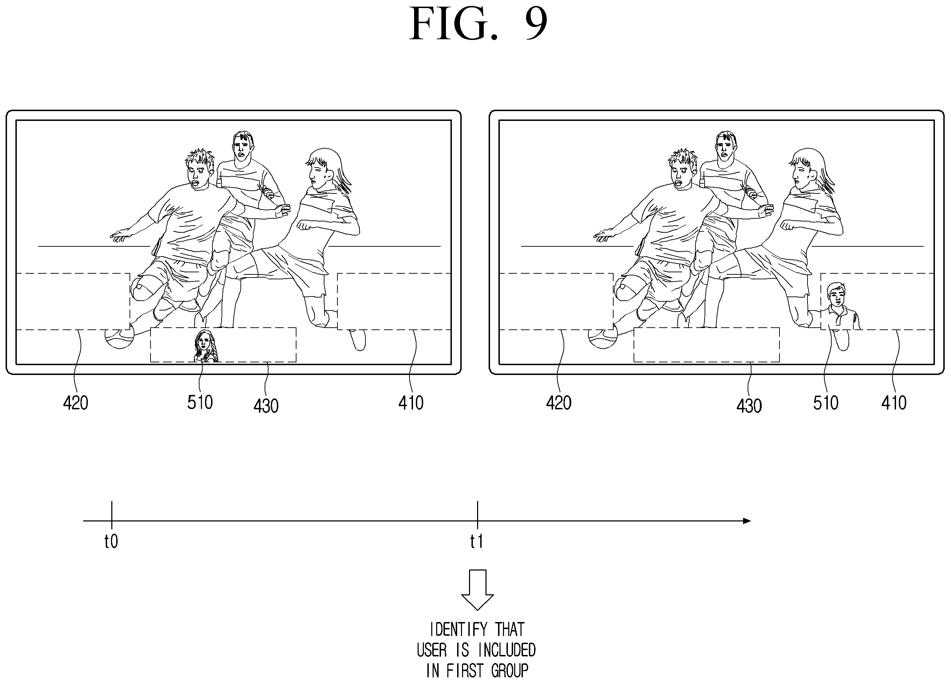

FIG. 9 is an exemplary view illustrating that a graphical object corresponding to a user is displayed on an area of the display 120 that is set corresponding to the first group according to an embodiment.

Referring to FIG. 9, when the content is a soccer match, the processor 130 may set areas 410, 420, and 430 corresponding to first to third groups corresponding to soccer match on the display 120. The processor 130 may set the area 410 corresponding to the first group (corresponding to the first team) on the right side of the display 120, the area 420 corresponding to the second group (corresponding to the second team) on the left side of the display 120, and the area 430 corresponding to the third group (corresponding to 'undefined') on the bottom center of the display 120. The processor 130 may display the graphical object corresponding to the user on the area 430 corresponding to the third group before the first group is identified (in t1). In other words, the processor 130 may set the waiting area to be the same as the area corresponding to the third group. Subsequently, when it is identified that the user 1 is included in the first group (i.e., when the first group is identified) (in t2), the processor 130 may display the graphical object corresponding to the user on the area 410 corresponding to the first group.

The processor 130 may also display graphical objects corresponding to a plurality of other users who are provided with the same content on the display 120 along with the graphical object corresponding to the user. In this way, the electronic apparatus 100 may increase the user 1's sense of immersion in the content.

In one example, the processor 130 may receive information about a plurality of other users who are provided with the content, from a server device that provides content via a communication interface of the electronic apparatus 100. Here, the information about other users may include information about groups to which other users are included. The other user information may include other user response information. The processor 130 may also receive other user information from other electronic apparatuses that receive the same content from the server device. In other words, the processor 130 may receive other user information about other users who are viewing the content through each of the other electronic apparatuses from the plurality of other electronic apparatuses.

The processor 130 may identify a group where each of the plurality of other users is included based on the plurality of other user information received from the server device. In other words, the processor 130 may categorize the plurality of other users along with the user 1 into groups. The processor 130 may display graphical objects corresponding to at least one user included in each group on an area set corresponding to each group.

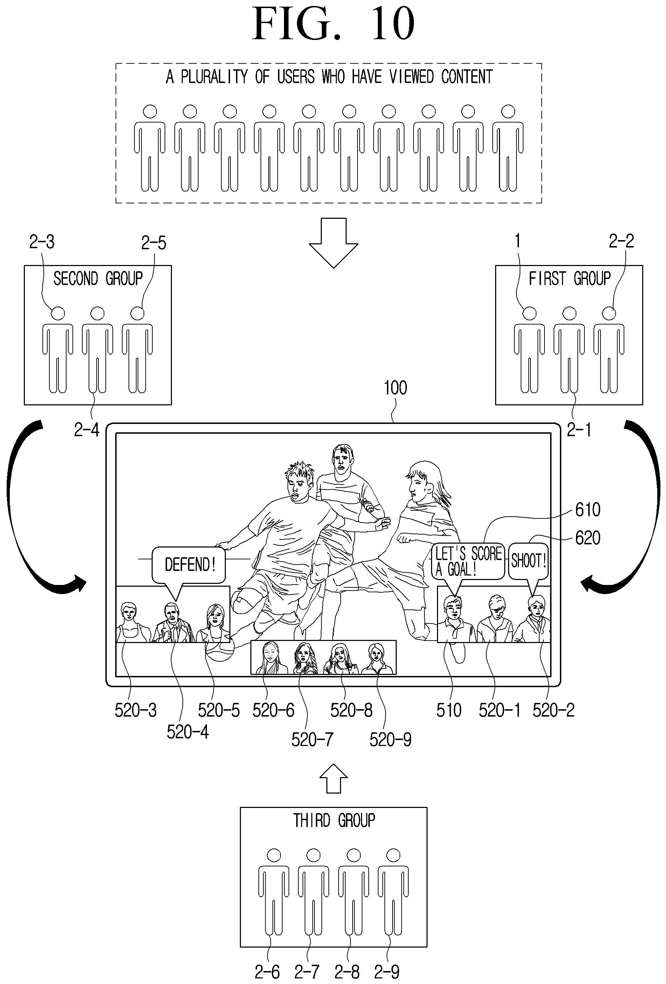

FIG. 10 is an exemplary view illustrating a method of categorizing a plurality of users into groups, and displaying graphical objects corresponding to users included in groups on the display 120 according to an embodiment.

Referring to FIG. 10, when the content is a soccer match, the processor 130 may receive information about a plurality of other users 2-1 to 2-9 (i.e., a plurality of other user information) watching the same soccer match (or using other electronic apparatuses 100 that are provided with the same soccer match) from the server device. The processor 130 may categorize the plurality of users 1 and 2-1 to 2-9 watching the same soccer match, including the user 1, into a first group, a second group, and a third group.

When there are nine other users watching the same soccer match as the user 1, processor 130 may identify a group that includes nine other users as well as the user 1. The processor 130 may identify that the first group includes two other users as well as the user 1, the second group includes three other users, and the third group includes four other users. Accordingly, the processor 130 may display two graphical objects 520-1 and 520-2 corresponding to the two other users 2-1 and 2-2 included in the first group, along with the graphical object 510 corresponding to the user, on the right area 410 of the display 120 set corresponding to the first group. The processor 130 may display three graphical objects 520-2 to 520-5 corresponding to the three other users 2-3 to 2-5 on the left area 420 of the display 120 set corresponding to the second group. The processor 130 may display four graphical objects 520-6 to 520-9 corresponding to four other users 2-6 to 2-9 on the bottom center area 420 of the display 120 set corresponding to the third group. The graphical objects corresponding to the other users may be generated based on information of the preset graphical objects of the other users included in the other user information.

The processor 130 may display information entered by the user 1 with each object. For example, based on a chat service provided between other electronic apparatuses (or an external server device) and the electronic apparatus 100, the processor 130 may display chat messages 610 and 620 entered by each user on the object corresponding to each user. Alternatively, the processor 130 may display a message corresponding to the voice of each user input via the microphone on the object corresponding to each user. Alternatively, the processor 130 may change the facial expression of the graphical object to correspond to the facial expression of the user identified through the plurality of images. The information about the chat messages of other users and the voices and facial expressions of other users may be included in the other user information.

When the number of a plurality of users included in each group is equal to or greater than a preset number, the processor 130 may display objects corresponding to the plurality of users on the display 120 based on a picture in picture (PIP) method, or may select only a preset number of users from among the plurality of users based on a response score corresponding to the plurality of users, and display only objects corresponding to the selected plurality of users.

For example, the processor 130 may not display graphical objects corresponding to other users or graphical objects corresponding to other users included in groups other than the group including the user 1, based on the user 1 settings.

According to an embodiment, the other user information may include response score information of the other users. The processor 130 may determine the size and location of the objects corresponding to the plurality of users based on the response scores of the plurality of users included in each group.

The processor 130 may control the settings such that the higher the response score or the absolute value of the response score of the user 1, the larger the size of the object corresponding to the user.

Alternatively, the processor 130 may display a plurality of objects corresponding to a plurality of users included in each group within an area corresponding to each group in the descending order of response score. Alternatively, the processor 130 may display an object corresponding to a user with the highest response score from among the plurality of users included in the group in the center of the area corresponding to the group. The processor 130 may also display objects corresponding to the remaining users on the display 120 in the descending order of response score around the object corresponding to the user with the highest response score.

Here, storing information about the neural network model may mean storing various information related to the operation of the neural network model, for example, information about the at least one layer included in the neural network model, information about at least one layer included in the neural network model, information about parameters, biases, etc., utilized by each of the at least one layer, and the like. However, depending on the implementation of the processor 130, information about the neural network model may be stored in an internal memory of the processor 130. For example, when the processor 130 is implemented as dedicated hardware, information about the neural network model may be stored in the internal memory of the processor 130.

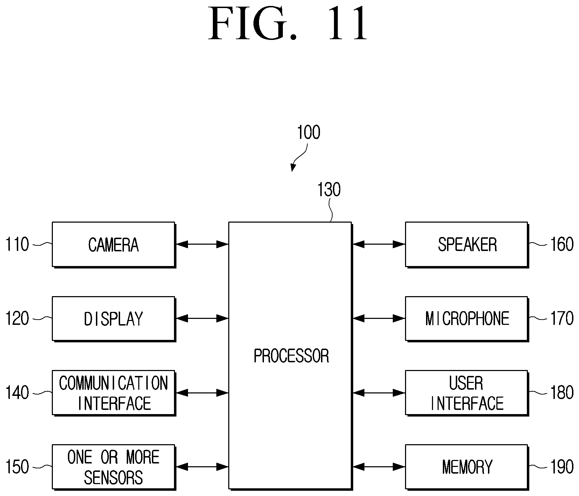

FIG. 11 is a detailed block diagram of the electronic apparatus 100 according to an embodiment.

Referring to FIG. 11, the electronic apparatus 100 includes a camera 110, a display 120, a communication interface 140, one or more sensors 150, a speaker 160, a user 1 interface 180, a memory 190, and a processor 130. The configurations shown in FIG. 11 that overlap with the configurations shown in FIG. 2 will not be described in detail.

The communication interface 140 may transmit or receive various types of content. For example, via the communication interface 140, the processor 130 may receive content, and/or other user information. Via the communication interface 140, the processor 130 may also transmit user information to another electronic apparatus 100. The processor 130 may also receive a plurality of images via the communication interface 140. In other words, the processor 130 may obtain a plurality of images of the user 1 from an external camera disposed adjacent to the electronic apparatus 100 other than the camera 110.

The communication interface 140 may receive/transmit a signal from/to an external device (e.g., user 1 terminal), an external storage medium (e.g., USB memory), an external server (e.g., Webhard), etc., in a streaming or downloading method, through a communication method such as an access point (AP)-based wireless fidelity (Wi-Fi, wireless local area network (LAN)), a Bluetooth, a Zigbee, a wired/wireless local area network (LAN), a wide area network (WAN), Ethernet, an IEEE 1394 serial bus, a high definition multimedia interface (HDMI), a mobile high-definition link (MHL), Audio Engineering Society/European Broadcasting Union (AES/EBU) communication, optical communication, coaxial communication, etc.

The electronic apparatus 100 may include one or more sensors 150. The one or more sensors 150 may include a sensor (e.g., LiDAR sensor, time of flight, ToF, sensor, etc.) that detects objects around the electronic apparatus 100. In addition, the one or more sensors 150 may include at least one of a gesture sensor, a gyro sensor, a barometric pressure sensor, a magnetic sensor, an acceleration sensor, a grip sensor, a proximity sensor, a color sensor (e.g., an RGB (red, green, blue) sensor), a biometric sensor, a temperature/humidity sensor, an illumination sensor, or a UV (ultraviolet) sensor.

The speaker 160 may output an acoustic signal to the outside of the electronic apparatus 100. The speaker 160 may output multimedia playback, recording playback, various notification sounds, voice messages, etc. The electronic apparatus 100 may include an audio output device such as the speaker 160, and/or may include an output device such as an audio output terminal. In particular, the speaker 160 may provide obtained information, information processed and produced based on the obtained information, response results or operation results relating to the voice of the user 1.

The microphone 170 may receive the voice of the user 1. In addition, the microphone 170 may receive various audio signals related to the user 1 who is viewing content.

The user 1 interface 180 is configured for the electronic apparatus 100 to perform an interaction with the user 1, and the processor 130 may receive various information such as control information of the electronic apparatus 100 through the user 1 interface 180. In particular, chat messages about content may be received through the user 1 interface 180. The user 1 interface 180 may include at least one of a touch sensor, a motion sensor, a button, a jog dial, a switch, and a microphone, but is not limited thereto.

The memory 190 may store data in various embodiments of the present disclosure. As an example, image content displayed on the electronic apparatus 100 may be stored in the memory 190.

The memory 190 may be implemented as a memory embedded in the electronic apparatus 100 or as a memory detachable from the electronic apparatus 100 depending on the data storage purpose. For example, in the case of data for driving the electronic apparatus 100, the data may be stored in the memory embedded in the electronic apparatus 100, and in the case of data for the expansion function of the electronic apparatus 100, the data may be stored in a memory detachable from the electronic apparatus 100.

The memory embedded in the electronic apparatus 100 may be implemented as at least one of a volatile memory (e.g. a dynamic RAM (DRAM), a static RAM (SRAM), or a synchronous dynamic RAM (SDRAM)), or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)).

The memory detachable from the electronic apparatus 100 may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or the like.

According to an embodiment, the memory 190 may store information about a plurality of neural network (or artificial intelligence) models. As an example, the memory 190 may store a neural network model trained to identify context information of content and a neural network model trained to identify a response type (and a probability value corresponding to the response type) of the user 1 based on a plurality of images.

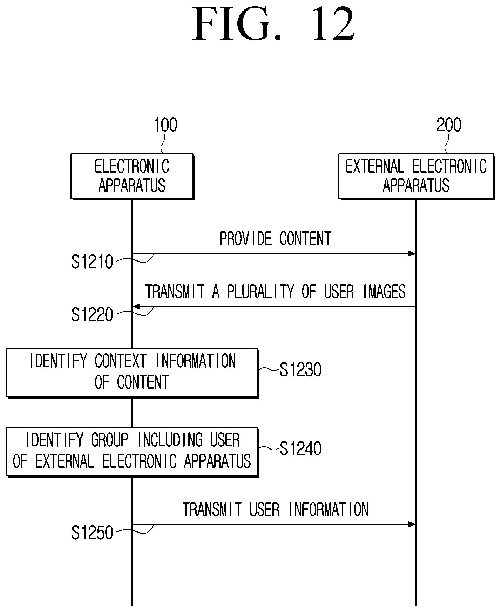

FIG. 12 is a sequence view illustrating the electronic apparatus 100 that is implemented as a server device according to an embodiment.

According to an embodiment, the electronic apparatus may be implemented as a server device. The server device may be a server device (e.g., an OTT platform server, etc.) that provides content to a plurality of external electronic apparatuses.

Referring to FIG. 12, the electronic apparatus provides content to an external electronic apparatus (S1210). While FIG. 12 illustrates that content is provided to a single external electronic apparatus, this is for convenience of explaining the invention only, and the electronic apparatus may provide content to a plurality of external electronic apparatuses via a communication interface of the electronic apparatus.

The electronic apparatus 100 may receive an image of a user viewing content via an external electronic apparatus from the external electronic apparatus (S1320). In particular, the electronic apparatus 100 may further receive the user's voice information, the user's chat messages, and the like as well as the image from the external electronic apparatus.

The electronic apparatus may identify context information of the content (S1330). In other words, the electronic apparatus may identify context information of the content provided to the external electronic apparatus in real time.

Based on the received image and the identified context information, the electronic apparatus may identify a response type according to the user's situation in the content, and identify the first group including the user from among a plurality of groups corresponding to the content image (S1240).

The electronic apparatus may transmit user information to an external electronic apparatus (S1250). Here, the user information may include information about the first group where the user is included, and may also include the user's response score information. The processor may also transmit to the external electronic apparatus user information from other external electronic apparatuses other than the external electronic apparatus. In particular, the electronic apparatus may transmit group information that includes a plurality of users viewing content provided by the electronic apparatus to each of the external electronic apparatuses.

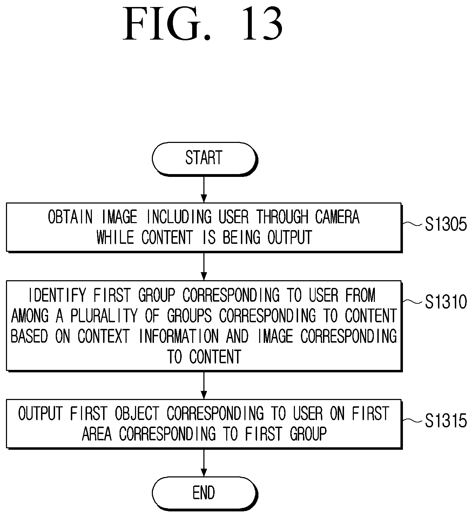

FIG. 13 is a flowchart schematically illustrating a method of controlling the electronic apparatus 100 according to an embodiment.

Referring to FIG. 13, at least one processor 130 may obtain an image including a user via the camera 110 while content is being output via the display 120 (S1405), identify a first group corresponding to the user from among a plurality of groups corresponding to the content based on the image and context information corresponding to the content (S1410), and control the display 120 to output a first graphical object corresponding to the user on a first area of the display 120 corresponding to the first group (S1415).

In the description above and below, operations that are described as being performed by the at least one processor 130 may be described as being performed by the electronic apparatus 100.

The at least one processor 130 may output (or display) content via the display 120. The at least one processor 130 may obtain an image via the camera 110. The image may be described as a captured image or a user image. The at least one processor 130 may obtain at least one image.

The content may be described as a content image, and the image obtained through the camera 110 may be described as a captured image.

In one example, the at least one processor 130 may obtain one image corresponding to a particular point in time.

In one example, the at least one processor 130 may obtain a plurality of images corresponding to a particular period of time.

The image may include a user photographed. The at least one processor 130 may analyze the user's response based on the user (or user object) included in the image. The at least one processor 130 may specify a group that is currently preferred (or represented) by the user based on the user's response.

The at least one processor 130 may identify at least one group based on the content that is being output. For example, when the content is a soccer match, the at least one processor 130 may analyze the content to identify a group corresponding to Team A and a group corresponding to Team B. The at least one processor 130 may utilize an optical character recognition (OCR) function or an automatic content recognition (ACR) function to identify a group corresponding to the content.

The at least one processor 130 may analyze the user's response based on content and images with respect to a particular point in time.

The at least one processor 130 may obtain context information corresponding to the content at a particular point in time. Specific description related to context information is provided in FIG. 3. The at least one processor 130 may obtain a user response corresponding to the image at a particular point in time. The at least one processor 130 may compare the context information and the user response at a particular point in time. The at least one processor 130 may identify the first group corresponding to the user based on the results of the comparison.

The at least one processor 130 may obtain user response information including a user response score corresponding to each of the plurality of groups based on the context information and the image, and identify the first group based on the user response information. The user response information may include a user response score corresponding to each of the plurality of groups.

For example, when there are multiple groups, the user response score may include multiple user response scores. The user response information may include a first score corresponding to a first group, a second score corresponding to a second group, and a third score corresponding to a third group.

In one example, when there are multiple time periods to be analyzed, the at least one processor 130 may obtain a sub score corresponding to each time period. The at least one processor 130 may sum the sub scores corresponding to each time period to obtain an overall user response score.

The user response information may be described as user response data, a user response table, a group-response mapping table, a user response score table, etc.

The at least one processor 130 may analyze the content to identify at least one of the first group, the second group, or the third group. The first group may refer to a group associated with a first team recognized in the content. The second group may refer to a group associated with a second team recognized in the content. The third group can mean a group that is not recognized as any team in the content.

The at least one processor 130 may identify which group (or which team) the user prefers (or is rooting for) based on the context information and the image. To identify the group (or preferred group) corresponding to the user, the at least one processor 130 may obtain (or calculate) a user response score for each group. The at least one processor 130 may obtain at least one of a user response score corresponding to the first group, a user response score corresponding to the second group, or a user response score corresponding to the third group. The process of calculating the user response score is described in FIGS. 5 to 8.

The at least one processor 130 may obtain context information including a context type and a context correspondence probability value associated with the content, obtain a response type corresponding to the context type based on the image, and obtain user response information based on the context correspondence probability value and the response type.

The response type may represent criteria that categorize a user's response into a preset type. The response type may include a type indicating whether the user's current response is positive, negative, or neutral in viewing content. The response type may be described as response type information.

The number of response types and their definitions may be changed based on user settings.

For example, the number of response types may be two. The response type may include at least one of positive or negative.

For example, the number of response types may be three. The response types may include at least one of positive, negative, or neutral.

For example, the number of response types may be four. The response types may include at least one of strong positive, negative, or neutral.

When a user response score equal to or greater than a threshold value is identified from among a plurality of user response scores included in the user response information, the at least one processor 130 may identify a group corresponding to the identified user response score as the first group.

The at least one processor 130 may determine that the higher the user response score, the more positive the user is about the context information identified from the content. When the user response score is relatively high at a particular point in time, the at least one processor 130 may identify the context information identified at the particular point in time as more preferrable.

When a particular user response score is equal to or greater than a threshold value, the at least one processor 130 may identify a group corresponding to the particular user response score as the first group.

The apparatus may further include the memory 190 that stores history information including at least one of a content viewing history or a group identification history, and the at least one processor 130 may identify a group corresponding to the user from among the plurality of groups based on the history information, and identify the first group by applying a first weight to a user response score corresponding to the identified group.

The history information may include at least one of a past viewing history and/or a past analysis history, e.g., the results of a previous analysis such as an analysis of the content. The at least one processor 130 may store a viewing history for content that has been viewed by a user. The viewing history for the content may include information about a particular group identified from the content. The information about the particular group may be obtained via metadata of the content. The metadata may include electronic program guide (EPG) data of the content. The at least one processor 130 may identify (or analyze) which group the user prefers through the EPG data of the content that the user is watching.

The at least one processor 130 may store an analysis history including a result of identifying a group corresponding to the user. When a group corresponding to the user is identified based on the content and the image, the at least one processor 130 may store the identification result as the analysis history.

The at least one processor 130 may store in the memory 190 history information that includes at least one of a viewing history or an analysis history. The at least one processor 130 may use the history information to identify the user preferred by the user. Once the user's preferred group is identified, the at least one processor 130 may apply (or give) a first weight to the user's preferred group. The at least one processor 130 may use the first weight such that a higher user response score is obtained (or calculated) for the user's preferred group.

Description for the history information is provided in relation to FIG. 6.

The electronic apparatus may further include a communication interface, and the at least one processor 130 may receive, via the communication interface, other user response information of other users corresponding to the first group from the server device, and may control the display 120 to output the second graphical object corresponding to another user along with the first object on the first area based on the other user response information.

The first object and the second object may include at least one of text information or graphical user interface (GUI) information representing the user. For example, the first object and the second object may include at least one of an avatar, an icon, or a profile image representing each user.

The at least one processor 130 may identify a group preferred by the user of the electronic apparatus 100 as the first group. The at least one processor 130 may output, along with the first object, the second object corresponding to other users who also prefer the first group preferred by the user. The at least one processor 130 may obtain information related to the other users from the server device (or an external server).

The at least one processor 130 may obtain other user response information corresponding to the other users from the server device.

The other user response information may include other user response scores corresponding to the first group. Based on the user response score and the other user response scores, the at least one processor 130 may identify a first size of the first object, a first location of the first object, a second size of the second object, and a second location of the second object.

The at least one processor 130 may control the display 120 to output the first object in the first size on the first area at the first location, and may control the display 120 to output the second object in the second size on the first area at the second location.

The at least one processor 130 may identify other users who prefer the same group as the user of the electronic apparatus 100. The at least one processor 130 may output the first object corresponding to the user and the second object corresponding to the other users on the first area.

The at least one processor 130 may determine at least one of a size of the object or a location of the object based on the user response score.

For example, the higher the user response score, the larger the object can be.

For example, the larger the user response score, the more left (or up) the object may be positioned. The larger the user response score, the at least one processor 130 may give a priority for a particular orientation to the object corresponding to the user response score. The criteria for a particular orientation may be changed by user settings.

The user of the electronic apparatus 100 may be described as the first user, and other users may be described as the second user.

The operation of displaying objects in relation to the user and other users is described in relation to FIGS. 9 and 10.

The electronic apparatus may further include the microphone 170, and the at least one processor 130 may, while displaying content via the display 120, obtain an audio signal including a user voice via the microphone 170, obtain first user response information based on the image, obtain second user response information based on the audio signal, and identify the first group based on the first user response information and the second user response information.

The at least one processor 130 may identify the first group by summing the first user response score included in the first user response information and the second user response score included in the second user response information by group.

The at least one processor 130 may utilize both the image and the audio signal to analyze the user's response. An embodiment in this regard is described in relation to FIG. 7.

The at least one processor 130 may identify the first group by obtaining a first response type at a preset time based on the image, obtaining a second response type at a preset time based on the audio signal, and when the first response type corresponds to the second response type, applying the second weight to the user response score corresponding to the preset time.

The at least one processor 130 may identify whether the first response type obtained from the image at the preset time and the second response type obtained from the audio signal at the preset time are the same. When the first response type and the second response type match, the at least one processor 130 may apply (or give) the second weight to the user response score obtained at the preset time. The at least one processor 130 may utilize the second weight such that a higher user response score is obtained (or calculated) for the time when the first response type and the second response type match.

The methods according to the above-described various embodiments of the disclosure may be implemented in the form of an application which may be installed in the existing electronic apparatus. Alternatively, the methods according to the above-described various embodiments may be performed using a neural network trained based on deep learning (or deep learned neural network), that is, a learning network model. The methods according to the above-described various embodiments may be implemented only by software upgrade or hardware upgrade of the existing electronic apparatus. The above-described various embodiments may be performed through an embedded server included in the electronic apparatus, or an external server of the electronic apparatus.

According to an embodiment, the above-described various embodiments may be implemented in software including an instruction stored in a machine-readable storage medium that can be read by a machine (e.g., a computer). The machine may be a device that invokes the stored instruction from the storage medium and be operated based on the invoked instruction, and may include an electronic apparatus (e.g., electronic apparatus (100)) according to embodiments. In case that the instruction is executed by a processor, the processor may directly perform a function corresponding to the instruction using other components under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to an embodiment, methods according to various embodiments described above may be provided in a computer program product. The computer program product is a commodity, and may be traded between a seller and a buyer. The computer program product may be distributed in the form of a device-readable storage medium (e.g., compact disc read only memory (CD-ROM)) or online through an application store (e.g., PlayStore^{™}). In the case of online distribution, at least a portion of the computer program product may be stored, or at least temporarily generated, in a storage medium, such as a manufacturer's server, an application store's server, or the memory of a relay server.

Each of the components (e.g., modules or programs) according to the various embodiments may comprise a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before being integrated in the same or similar manner. Operations performed by modules, programs or other components according to the various embodiments may be executed in a sequential manner, a parallel manner, an iterative manner or a heuristic manner, or at least some of the operations may be performed in a different order or be omitted, or other operations may be added.

Hereinabove, although preferred embodiments of the present disclosure have been shown and described above, the disclosure is not limited to the specific embodiments described above, and various modifications may be made within the scope of the claims.

## Claims

1. An electronic apparatus comprising:
a camera;
a display; and
at least one processor,
wherein the at least one processor is configured to:
obtain an image including a user through the camera while content is being output through the display;
identify a first group including the user from among a plurality of groups corresponding to the content based on context information corresponding to the content, and the image; and
control the display to output a first graphical object corresponding to the user on a first area of the display corresponding to the first group.

2. The apparatus as claimed in claim 1, wherein the at least one processor is configured to:
obtain user response information including a user response score corresponding to each of the plurality of groups based on the context information and the image; and
identify the first group based on the user response information.

3. The apparatus as claimed in claim 2, wherein the at least one processor is configured to:
obtain the context information including a context type and a context correspondence probability value related to the content;
obtain a response type corresponding to the context type based on the image; and
obtain the user response information based on the context correspondence probability value and the response type.

4. The apparatus as claimed in claim 2, wherein the at least one processor is configured to, based on a user response score equal to or greater than a threshold value being identified from among a plurality of user response scores included in the user response information, identify a group corresponding to the identified user response score as the first group.

5. The apparatus as claimed in claim 2, further comprising:
a memory configured to store history information including at least one of a content viewing history or a group identification history,
wherein the at least one processor is configured to:
identify a group corresponding to the user from among the plurality of groups based on the history information; and
identify the first group by applying a first weight to a user response score corresponding to the identified group.

6. The apparatus as claimed in claim 1, further comprising:
a communication interface,
wherein the at least one processor is configured to:
receive response information of another user corresponding to the first group from a server device through the communication interface; and
control the display to output a second graphical object corresponding to the another user based on the another user response information together with the first graphical object on the first area.

7. The apparatus as claimed in claim 6, wherein the another user response information includes a response score of another user corresponding to the first group; and
wherein the at least one processor is configured to:
identify a first size of the first graphical object, a first location of the first graphical object, a second size of the second graphical object, and a second location of the second graphical object based on the user response score and the another user response information;
control the display to output the first graphical object at the first location in the first size on the first area; and
control the display to output the second graphical object at the second location in the second size on the first area.

8. The apparatus as claimed in claim 1, further comprising:
a microphone,
wherein the at least one processor is configured to:
obtain an audio signal including a user voice through the microphone while displaying the content through the display;
obtain first user response information based on the image;
obtain second user response information based on the audio signal; and
identify the first group based on the first user response information and the second user response information.

9. The apparatus as claimed in claim 8, wherein the at least one processor is configured to identify the first group by summing a first user response score included in the first user response information and a second user response score included in the second user response information by group.

10. The apparatus as claimed in claim 8 or 9, wherein the at least one processor is configured to:
obtain a first response type of a preset time based on the image;
obtain a second response type of the preset time based on the audio signal; and
based on the first response type corresponding to the second response type, identify the first group by applying a second weight to a user response score corresponding to the preset time.

11. A controlling method of an electronic apparatus including a display, the method comprising:
Obtaining an image including a user while content is being output through the display;
identifying a first group corresponding to the user from among a plurality of groups corresponding to the content based on context information corresponding to the content, and the image; and
outputting a first graphical object corresponding to the user on a first area of the display corresponding to the first group.

12. The method as claimed in claim 11, wherein the identifying a first group comprises:
obtaining user response information including a user response score corresponding to each of the plurality of groups based on the context information and the image; and
identifying the first group based on the user response information.

13. The method as claimed in claim 12, wherein the controlling method comprises:
obtaining the context information including a context type and a context correspondence probability value related to the content;
obtaining a response type corresponding to the context type based on the image; and
obtaining the user response information based on the context correspondence probability value and the response type.

14. The method as claimed in claim 12, wherein the identifying a first group comprises, based on a user response score equal to or greater than a threshold value being identified from among a plurality of user response scores included in the user response information, identifying a group corresponding to the identified user response score as the first group.

15. The method as claimed in claim 12, wherein the electronic apparatus is configured to store history information including at least one of a content viewing history or a group identification history;
wherein the identifying a first group comprises:
identifying a group corresponding to the user from among the plurality of groups based on the history information; and
identifying the first group by applying a first weight to a user response score corresponding to the identified group.
